Europäisches Patentamt

European Patent Office

Office européen des brevets

(19)

(11) Veröffentlichungsnummer: **0 295 396 B1**

# (12) EUROPÄISCHE PATENTSCHRIFT

(45) Veröffentlichungstag der Patentschrift: **22.07.92**

(21) Anmeldenummer: **88106567.6**

(22) Anmeldetag: **23.04.88**

(51) Int. Cl.⁵: **B62D 15/00**, B62D 9/00, B62D 11/08, B60T 8/24

(54) Bremssystem für ein lenkbares, zwei- oder mehrachsiges, wenigstens hinterachsseitig angetriebenes Kraftfahrzeug.

(30) Priorität: **13.06.87 DE 3719821**

(43) Veröffentlichungstag der Anmeldung:
**21.12.88 Patentblatt 88/51**

(45) Bekanntmachung des Hinweises auf die Patenterteilung:
**22.07.92 Patentblatt 92/30**

(84) Benannte Vertragsstaaten:
**AT CH DE FR IT LI SE**

(56) Entgegenhaltungen:
**DE-A- 2 007 097**
**DE-B- 2 142 506**
**GB-A- 2 136 748**

(73) Patentinhaber: **MAN Nutzfahrzeuge Aktiengesellschaft**
**Dachauer Strasse 667 Postfach 50 06 20**
**W-8000 München 50(DE)**

(72) Erfinder: **Rebholz, Walter**
**Raiffeisenstrasse 2**
**W-6741 Frankweiler(DE)**
Erfinder: **Kozel, Peter, Dipl.-Ing.**
**Lerchenstrasse 8**
**W-8063 Odelzhhausen(DE)**
Erfinder: **Breitling, Ulrich, Dr. Ing.**
**Nymphenburger Strasse 122**
**W-8000 München 19(DE)**
Erfinder: **Krenner, Manfred, Dipl.-Ing.**
**Linus-Funke-Weg 18**
**W-8000 München 50(DE)**
Erfinder: **Rieck, Gerhard, Dipl.-Ing.**
**Oderstrasse 8**
**W-7910 Neu-Ulm(DE)**

EP 0 295 396 B1

## Beschreibung

Die Erfindung betrifft ein Bremssystem für ein lenkbares, zwei- oder mehrachsiges, wenigstens hinterachsseitig angetriebenes Kraftfahrzeug, mit einer hydraulisch bzw. pneumatisch auf die Räder einwirkenden Betriebsbremseinrichtung und einer auf die Räder wenigstens einer Achse einwirkenden Feststellbremseinrichtung.

Unter Kraftfahrzeug ist dabei ein solches zu verstehen, das für den normalen Betrieb auf der Straße ausgelegt ist, aber auch in mehr oder weniger schwierigem Gelände eingesetzt werden kann und primär mit einer herkömmlichen, den gesetzmäßigen Vorschriften der Straßenverkehrsordnungszulassung gehorchenden Betriebsbremsanlage und Feststellbremse ausgerüstet ist.

Bei solchen, mit herkömmlichen Bremssystemen ausgestatteten Kraftfahrzeugen tritt beim Ein- und Durchfahren enger Kurven regelmäßig das Problem auf, daß das Fahrzeug aufgrund der Vortriebskraft der angetriebenen Räder und insbesondere bei schlechten Fahrbahnverhältnissen nicht exakt dem durch den Lenkradeinschlag vorgegebenen Kurvenradius folgt, sondern über die Vorderachse zur Kurvenaußenseite hin abgedrängt wird. Dieses Problem war bisher weder durch Allradantrieb mit gesperrten Differentialen noch durch die bekannten Antiblockiersysteme noch durch deren Kombination mit bekannten Antischlupfregelungssystemen beherrschbar. Solche Systeme sind beispielsweise aus der Fachzeitschrift "Antriebstechnik, März 1987, Seiten 14 bis 29" bekannt.

Desweiteren offenbart die DE-B-2142506 ein Spezialfahrzeug, ein Arbeitsfahrzeug wie Mobilkran, Bagger, Schaufellader, Gabelstapler, mit keiner herkömmlichen, sondern auf den speziellen Einsatzzweck zugeschnittener Bremsanlage. Solche Spezialfahrzeuge sind in der Regel sehr langsam und dürfen entweder gar nicht oder nur mit einer Spezialgenehmigung der Straßenverkehrszulassungsbehörde am öffentlichen Straßenverkehr teilnehmen. Diese Spezialfahrzeuge haben eine Bremsanlage, mit der grundsätzlich eine lenkwinkelabhängige automatische Abbremsung des angetriebenen kurveninneren Hinterrades herbeigeführt wird. Nur bei absoluter Geradeausfahrt sind beide angetriebenen Hinterräder gleichzeitig abbremsbar. Dies ist auch der Grund, warum solche Fahrzeuge nicht oder nur mit Höchstgeschwindigkeiten in der Regel von 20 km/h mit einer Spezialzulassung im Straßenverkehr bewegt werden dürfen.

Ähnliche Verhältnisse sind aus Sicht der GB-A-2136748 gegeben. Dort ist ein herkömmlicher Traktor offenbart, mit einer für solche Spezialfahrzeuge üblichen Bremsanlage mit zwei nebeneinander angeordneten Betriebsbremspedalen, eines zum Bremsen des linken und eines zum Bremsen des rechten Hinterrades. Tritt der Fahrer gleichzeitig beide Pedale, werden beide Hinterräder gleichzeitig abgebremst, tritt er dagegen nur eines der beiden Pedale, so wird nur das zugehörige Hinterrad gebremst, während das andere weiterhin angetrieben wird und so für ein Drehmoment um die Traktorhochachse sorgt.

Eine solche Bremsanlage ist aber für normale Kraftfahrzeuge, von denen die Erfindung ausgeht, nicht zulässig, denn dort muß mit einem einzigen Bremspedal das Bremsen des gesamten Fahrzeuges an allen Rädern ausgelöst werden können.

Es ist daher Aufgabe der Erfindung, ein Bremssystem für Kraftfahrzeuge der eingangs genannten Art so zu verbessern, daß ein Ein- und Durchfahren enger Kurven stabilisiert und so möglich ist, daß das Fahrzeug zumindest weitestgehend dem durch den Lenkeinschlag vorgegebenen Kurvenradius, ohne zur Kurvenaußenseite hin abzudrängen, folgt.

Diese Aufgabe ist bei einem gattungsgemäßen Kraftfahrzeug erfindungsgemäß durch Ergänzung der im Kraftfahrzeug bereits vorhandenen Betriebsbremseinrichtungen oder Feststellbremseinrichtungen mit Mitteln einer lenkwinkelabhängig arbeitenden Hilfsbremseinrichtung gelöst, die bedarfsweise aktivierbar ist und dann, wenn ein vorgegebener Mindest-Lenkeinschlag der gelenkten Räder bei einer unter einem bestimmten Wert liegenden Fahrgeschwindigkeit überschritten wird durch gezielte Bereitstellung von Bremsdruck eine einseitige Abbremsung des kurveninneren Rades bzw. der kurveninneren Räder zumindest der angetriebenen Hinterachse(n) des Fahrzeugs steuert.

Durch diese mit der erfindungsgemäßen Hilfsbremseinrichtung mögliche einseitige Bremsung des Fahrzeuges wird ein Drehmoment um die Fahrzeughochachse in die zu durchfahrende Kurve hinein von den nicht abgebremsten, angetriebenen Rädern erzeugt.

Durch dieses Drehmoment um die Fahrzeughochachse wird das Fahrzeug praktisch gezwungen, dem durch den Lenkeinschlag vorgegebenen Kurvenradius zu folgen. Auf diese Weise läßt sich mithin das bisher unvermeidbare Abdrängen des Fahrzeugs zur Kurvenaußenseite hin wirksam unterbinden.

Die Realisierung der Hilfsbremseinrichtung ist auf verschiedene Weise, angepaßt an und aufbauend auf die im Kraftfahrzeug bereits vorhandenen Bremseinrichtungen, realisierbar. Entsprechende Angaben hierzu sind in den Unteransprüchen aufgezeigt.

Nachstehend sind Einzelheiten und weitere Vorteile der Erfindung anhand mehrerer in der Zeichnung dargestellter Ausführungsbeispiele näher erläutert. In der Zeichnung zeigen:

Fig. 1    schematisch die Betriebsbremseinrichtung eines dreiachsigen Nutzfahrzeuges, ergänzt durch eine Ausführungsform der erfindungsgemäßen Hilfsbremseinrichtung,

Fig. 1A ein Detail der erfindungsgemäßen
Hilfsbremseinrichtung, das mit dem
System gemäß Fig. 1 verbindbar ist,

Fig. 1B ein Detail der erfindungsgemäßen
Hilfsbremseinrichtung, das anstelle
des Details von Fig. 1A mit dem
System gemäß Fig. 1 verbindbar ist,

Fig. 2 schematisch die Feststellbremseinrichtung, welche die Betriebsbremseinrichtung gemäß Fig. 1 im Fahrzeug ergänzt, kombiniert durch eine
Ausführungsform der erfindungsgemäßen Hilfsbremseinrichtung,

Fig. 2A ein Detail der erfindungsgemäßen
Hilfsbremseinrichtung, das mit dem
System gemäß Fig. 2 verbindbar ist,

Fig. 2B ein Detail der erfindungsgemäßen
Hilfsbremseinrichtung, das anstelle
des Details gemäß Fig. 2A mit dem
System gemäß Fig. 2 verbindbar ist,

Fig. 3 schematisiert die Betriebsbremseinrichtung eines zweiachsigen, allradangetriebenen Kraftfahrzeuges mit
Antiblockiersystem und einer Ausführungsform der erfindungsgemäßen Hilfsbremseinrichtung,

Fig. 4 schematisiert die Betriebsbremseinrichtung eines zweiachsigen, hinterachsseitig angetriebenen Kraftfahrzeuges mit Antiblockiersystem und
einer Ausführungsform der erfindungsgemäßen Hilfsbremseinrichtung,

Fig. 5 schematisiert die Betriebsbremseinrichtung eines dreiachsigen, allradangetriebenen Nutzfahrzeuges mit
Antiblockiersystem und einer Ausführungsform der erfindungsgemäßen Hilfsbremseinrichtung,

Fig. 6 schematisiert die Betriebsbremseinrichtung eines dreiachsigen, hinterachsseitig angetriebenen Nutzfahrzeuges mit Antiblockiersystem und
einer Ausführungsform der erfindungsgemäßen Hilfsbremseinrichtung,

Fig. 7 schematisiert die Betriebsbremseinrichtung eines zweiachsigen, allradangetriebenen Kraftfahrzeuges mit
Antiblockiersystem und hinterachsseitig wirkender Antischlupfregeleinrichtung, ergänzt durch eine Ausführungsform der erfindungsgemäßen
Hilfsbremseinrichtung,

Fig. 8 schematisiert die Betriebsbremseinrichtung eines zweiachsigen, hinterachsangetriebenen Kraftfahrzeuges
mit Antiblockiersystem und hinterachsseitig wirkender Antischlupfregeleinrichtung, ergänzt durch eine
Ausführungsform der erfindungsgemäßen Hilfsbremseinrichtung,

Fig. 9 schematisiert die Betriebsbremseinrichtung eines dreiachsigen, allradangetriebenen Nutzfahrzeuges mit
Antiblockiersystem und hinterachsseitig wirkender Antischlupfregeleinrichtung, ergänzt durch eine Ausführungsform der erfindungsgemäßen
Hilfsbremseinrichtung,

Fig. 10 schematisiert die Betriebsbremseinrichtung eines dreiachsigen, hinterachsenseitig angetriebenen Nutzfahrzeuges mit Antiblockiersystem und
hinterachsseitig wirkender Antischlupfregeleinrichtung ergänzt,
durch eine Ausführungsform der erfindungsgemäßen Hilfsbremseinrichtung.

In den Figuren sind der Übersichtlichkeit wegen gleiche bzw. einander entsprechende Bauteile
mit gleichen Bezugszeichen angezogen.

In den Figuren sind - soweit dargestellt - ein
Antriebsmotor samt Getriebe des Kraftfahrzeuges
mit 1, die zugehörige Kraftstoff-Einspritzpumpe mit
2, ein auf deren Regelstange einwirkender Stellmotor mit 3, die kardanische Antriebsverbindung zwischen Antriebsmotor/Getriebe 1 und Verteilergetriebe 4 (soweit vorhanden) an der Vorderachse 5 mit
6, ferner die kardanische Antriebsverbindung zwischen Antriebsmotor/Getriebe 1 und Verteilergetriebe 7 der Hinterachse 8 mit 9, und schließlich die
kardanische Antriebsverbindung (bei Dreiachsern)
zwischen Verteilergetriebe 7 der ersten Hinterachse
8 und dem Verteilergetriebe 10 der zweiten Hinterachse 11 (soweit vorhanden) mit 12 bezeichnet.

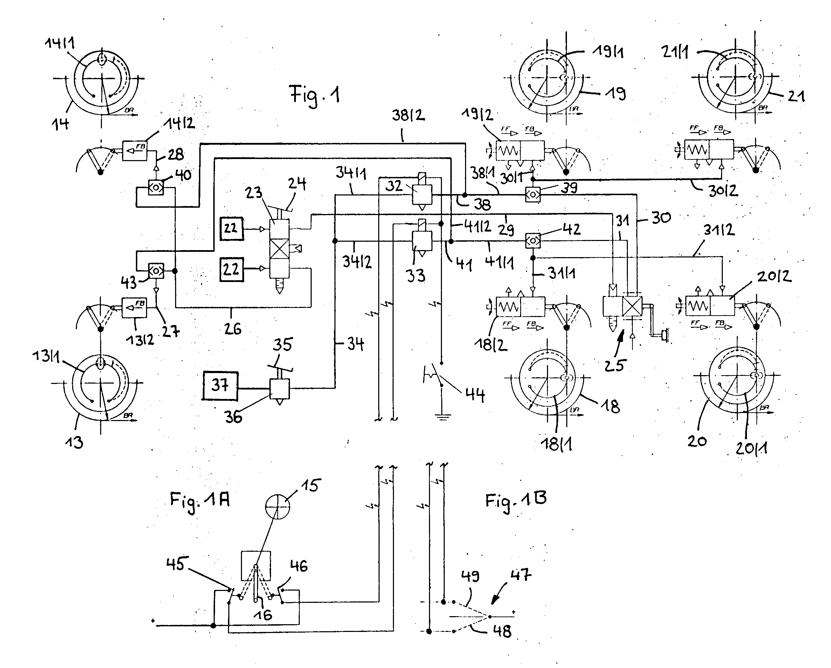

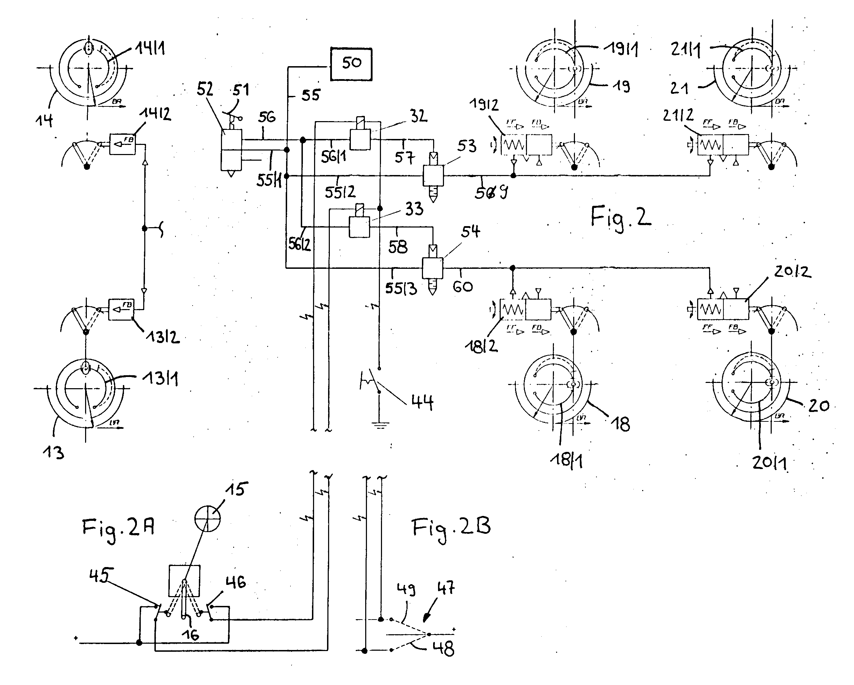

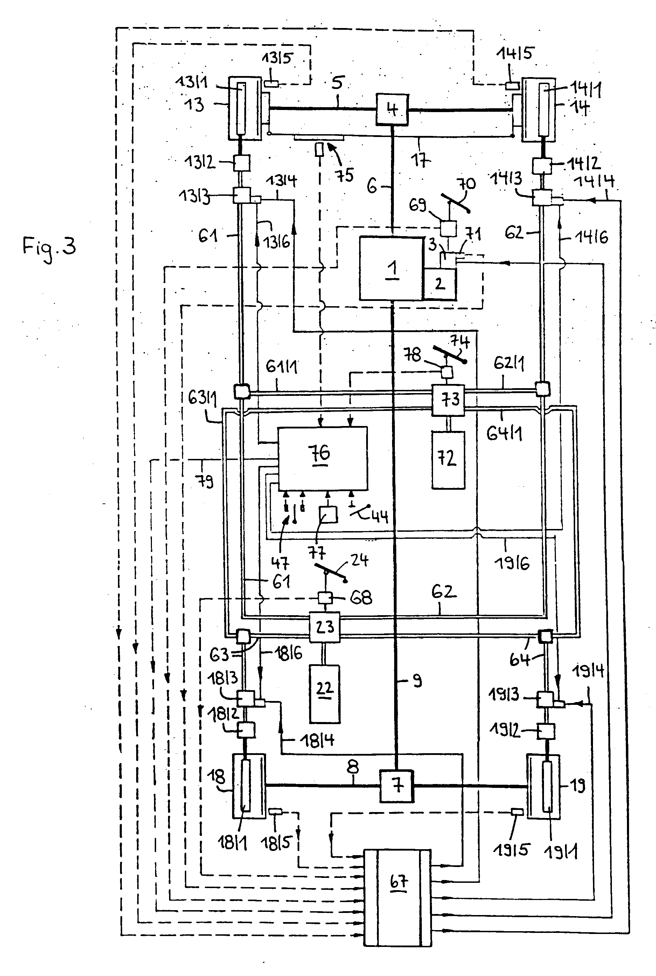

Die Vorderachse 5 ist in allen Fällen mit lenkbaren Rädern bestückt, wobei das linke Rad mit 13
und das rechte Rad mit 14 bezeichnet sind. Von
der Lenkeinrichtung des Fahrzeuges sind nur jene
für das Verständnis der Erfindung notwendigen
Teile dargestellt. In den Figuren 1A und 2A sind
dies ein Lenkrad 15, von dem ein Lenkhebel 16
aus einer neutralen, dem Geradauslauf zugehörigen Mittelpositionen nach rechts oder links, je nach
gewünschter Kurvenfahrt, verschwenkbar ist. In den
Figuren 3 bis 10 ist von der Lenkeinrichtung jeweils
nur die Spurstange 17 dargestellt. Die Hinterachse
7 ist mit einem jeweils einfach oder doppelt bereiften linken Rad 18 und einem rechten Rad 19
bestückt. Die etwaige vorhandene zweite Hinterachse 11 ist ebenfalls mit einem jeweils einfach oder doppelt bereiften linken Rad 20 und einem rechten Rad 21 bestückt.

Die Betriebsbremseinrichtung des Kraftfahrzeuges kann hydraulisch oder pneumatisch arbeitend ausgelegt sein. Die Druckmittelvorratung bzw. -versorgung ist in den Figuren mit 22 bezeichnet. Letztere steht mit einem Betriebsbremsventil 23 bekannter Bauart in Verbindung, das durch ein vom Fahrer zu betätigendes Betriebsbremspedal 24 aktivierbar ist und an dem die Betriebsbremskreise für die jeweiligen Radbremsen angeschlossen sind. In den Figuren sind die radinternen Bremseinrichtungen - übliche Backen-, Trommel- oder Scheibenbremsen-des Rades 13 mit 13/1, des Rades 14 mit 14/1, des Rades 18 mit 18/1, des Rades 19 mit 19/1, des Rades 20 mit 20/1 und des Rades 21 mit 21/1 bezeichnet. Jeder radinternen Bremseinrichtung ist ein Bremsdruckzylinder mit Übertragungseinrichtung zur Betätigung der verstellbaren Bremsorgane - Bremsbacken, Bremstrommeln - zugeordnet, wobei der zugehörige Bremsdruckzylinder des Rades 13 mit 13/2, des Rades 14 mit 14/2, des Rades 18 mit 18/2, des Rades 19 mit 19/2, des Rades 20 mit 20/2 und des Rades 21 mit 21/2 bezeichnet ist.

Mit 25 ist in Fig. 1 ein Bremskraftregler bezeichnet, der in den Fig. 3 bis 10 der Übersichtlichkeit wegen weggelassen wurde.

Bei dem Betriebsbremssystem gemäß Fig. 1 stehen die beiden vorderradseitigen Bremsdruckzylinder 13/2, 14/2 über einen ersten Betriebsbremskreis (Leitung 26 und Abzweigleitungen 27, 28) mit dem Betriebsbremsventil 23 in Verbindung. Außerdem stehen die hinterachsseitigen Bremsdruckzylinder 18/2, 19/2, 20/2, 21/2 über einen zweiten Betriebsbremskreis mit dem Betriebsbremsventil 23 in Verbindung. Dabei führt eine Leitung 29 zum Bremskraftregler 25, von dem wiederum eine erste Leitung 30 und eine zweite Leitung 31 abzweigen, wobei sich die Leitung 30 in zwei Zweige 30/1 und 30/2 aufteilt, von denen der eine 30/1 zum Bremsdruckzylinder 19/2 und der andere 30/2 zum Bremsdruckzylinder 21/2 führt, und wobei sich die Leitung 31 ebenfalls in zwei Zweige 31/1 und 31/2 aufteilt, von denen der eine 31/1 zum Bremsdruckzylinder 18/2 und der andere 31/2 zum Bremsdruckzylinder 20/2 führt.

Die Aufteilung der Leitungen 30, 31, entfällt dann, wenn die zweite Hinterachse mit den Rädern 20, 21, nicht vorhanden ist. In diesem Fall würden die Leitungen 30, 31, direkt zum jeweiligen Bremsdruckzylinder 18/2 bzw. 19/2 führen.

Diesem so beschriebenen Betriebsbremssystem des Kraftfahrzeuges ist die erfindungsgemäße Hilfsbremseinrichtung zugeordnet, in einer Ausführungsform seiner Mittel, bei der weitestgehend auf die vorhandenen Teile des Betriebsbremssystemes aufgebaut wird. Diese Hilfsbremseinrichtung ist so aufgebaut, daß alle Räder einer Fahrzeuglängsseite jeweils einseitig gemeinsam abbremsbar sind, während dann die Räder der gegenüberliegenden Fahrzeuglängsachse ungebremst bleiben.

Die Hilfsbremseinrichtung ist generell so ausgelegt, daß sie bei Fahrt bedarfsweise aktivierbar ist. Außerdem arbeitet die Hilfsbremseinrichtung lenkeinschlagabhängig.

Die Hilfsbremseinrichtung gemäß Fig. 1 ist aus Kostengründen so einfach wie nur möglich realisiert. Hierzu sind zwei Magnetventile 32, 33, vorgesehen, die über Druckleitungen 34, 34/1 und 34/2 an einem vom Fahrer bei Bedarf mittels eines Betätigungsorganes 35, zum Beispiel Fußpedal oder Handhebel, betätigbaren Hilfsbremsventiles 36 angeschlossen sind. Letzteres steht mit einer Druckmittelversorgung 37 in Verbindung.

Das Magnetventil 32 steht über eine Ausgangsdruckleitung 38, die sich in zwei Zweige 38/1 und 38/2 aufteilt, über den einen Zweig 38/1 mit der Leitung 30 des zweiten Betriebsbremskreises unter Einschaltung eines 2-Wegeventiles 39 und über den Zweig 38/2 mit der Leitung 28 des ersten Betriebsbremskreises unter Einschaltung eines 2-Wegeventiles 40 in Verbindung. Das zweite Magnetventil 33 steht über eine Ausgangsdruckleitung 41, die sich in zwei Zweige 41/1 und 41/2 verzweigt, über den einen Zweig 41/1 mit der Leitung 31 des zweiten Betriebsbremskreises unter Einschaltung eines 2-Wegeventils 42 und über den Zweig 41/2 mit der Leitung 27 des ersten Betriebsbremskreises unter Einschaltung eines 2-Wegeventiles 43 in Verbindung.

Beide Magnetventile 32, 33, sind bei dieser Ausführungsform der Hilfsbremseinrichtung mit einem elektrischen Hauptschalter 44 verbunden. Letzterer ist vom Fahrer dann zu betätigen, wenn die einseitige Bremsung des Fahrzeuges notwendig ist und das Fahrzeug sich noch unterhalb einer bestimmten Geschwindigkeit, bei geländegängigen Fahrzeugen beispielsweise 25 km/h, bewegt. Wird der Hauptschalter 44 geschlossen, dann können die Magnetventile 32, 33, überhaupt erst betätigt werden. Für die Betätigung der Magnetventile 32, 33, sind zwei in den Figuren 1A und 1B angegebene Ausführungsformen möglich. Bei der Ausführung nach Fig. 1A ist jedes der beiden Magnetventile 32 bzw. 33 über ein Steuerkabel mit einem Grenzwertschalter 45 bzw. 46 verbunden, die an eine Stromversorgung (+) angeschlossen und im Bewegungsbereich eines den Lenkeinschlag vorgebenden Lenkeinrichtungsorganes, hier dem Lenkhebel 16, im Fahrzeug angeordnet sind, und zwar in gleichen Abständen von einer der Geradeausfahrt zugehörigen Grundstellung. Dabei ist die Anordnung der Grenzwertschalter 45, 46, so getroffen, daß jeder derselben bei maximalem Lenkeinschlag oder einem bestimmten Wert vor dem maximalen Lenkeinschlag, zum Beispiel bei 90% Lenkeinschlag, geschlossen wird.

Die alternative Lösung gemäß Fig. 1B sieht statt dessen eine Verbindung der beiden Magnetventile mit dem Blinkhebelschalter 47 vor, wobei, wenn der Blinkhebel für Fahrtrichtungswechsel nach links betätigt wird, der mit dem Magnetventil 32 verbundene Schalter 48 geschlossen wird, und wobei, wenn der Blinkhebel für Fahrtrichtungswechsel nach rechts betätigt wird, der mit dem Magnetventil 33 verbundene Schalter 49 geschlossen wird.

Unabhängig davon, ob die Ausführungsform nach Fig. 1A oder 1B vorhanden ist, bewirkt das Schließen des Schalters 46 bzw. 48 dann, wenn auch der Hauptschalter 44 geschlossen ist, eine Betätigung des Magnetventiles 32, wobei die Verbindung zwischen den Leitungen 34/1 und 38 durchgeschaltet ist. Betätigt der Fahrer nun mit dem Betätigungsorgan 35 das Hilfsbremsventil 36, so wird Druck aus dem Vorrat 37 zu den Bremsdruckzylindern 14/2, 19/2 und 21/2 geleitet und dadurch nur alle Räder 14, 19, 21, der rechten Fahrzeuglängsseite abgebremst. Der sich einstellende Bremsdruck kann konstant oder dosierbar sein. In gleicher Weise bewirkt das Schließen des Schalters 45 bzw. 49 dann, wenn auch der Hauptschalter 44 geschlossen ist, eine Betätigung des Magnetventiles 33, wobei dann die Verbindung zwischen den Leitungen 34/2 und 41 durchgeschaltet ist. Betätigt der Fahrer dann mit dem Betätigungsorgan 35 das Hilfsbremsventil 36, so wird Druck aus dem Vorrat 37 zu den Bremsdruckzylindern 13/2, 18/2 und 20/2 geleitet und dadurch nur alle Räder 13, 18, 20, der linken Fahrzeuglängsseite abgebremst.

Sobald der vorher geschlossene Schalter 45 bzw. 46 bzw. 48 bzw. 49 wieder geöffnet oder der Hauptschalter 44 geöffnet wird, schließt das vorher offene Magnetventil 32 bzw. 33 wieder; die einseitige Bremsung des Fahrzeugs ist dann beendet.

Fig. 2 zeigt die Feststellbremseinrichtung eines dreiachsigen Fahrzeuges, ergänzt durch eine Ausführungsform der erfindungsgemäßen Hilfsbremseinrichtung. Dabei sind als Teil der Feststellbremseinrichtung eine Druckmittelversorgungseinrichtung 50 und ein durch ein vom Fahrer zu betätigendes Organ 51, z.B. Handhebel oder Fußpedal-Feststellbremsventil 52, vorgesehen. Letzteres ist ebenso wie zwei Relaisventile 53, 54, bekannter Bauart über Zuleitungen 55, 55/1, 55/2, 55/3, an der Druckmittelversorgung 50 angeschlossen. Am Ausgang 56 des Feststellbremsventiles 52 sind als Teile der erfindungsgemäßen Hilfbremseinrichtung über je eine Zweigleitung 56/1, 56/2, je ein Magnetventil 32 bzw. 33 angeschlossen. Diese Magnetventile 32, 33, sind mit einem Hauptschalter 44 und Schalteinrichtungen 45, 46, 16 bzw. 47, 48, 49, verbunden, die jenen gemäß Fig. 1, 1A und 1B entsprechen. Außerdem steht jedes Magnetventil 32 bzw. 33 mit seinem Druckausgang 57 bzw. 58 mit dem Drucksteuerorgan des Relaisventiles 53 bzw. 54 in Verbindung, bei dem es sich um einen Druckraum und darin verschiebbaren Drucksteuerkolben handelt, der einen bestimmten, relativ großen Durchlaßquerschnitt freigeben kann. An der Ausgangsleitung 59 des Relaisventiles 53 sind die Federspeicher der Bremsdruckzylinder 19/2 und 21/2 und an der Ausgangsleitung 60 des Relaisventiles 54 sind die Federspeicher der Bremsdruckzylinder 18/2 und 20/2 angeschlossen.

In diesem Fall bewirkt das Schließen des Schalters 46 bzw. 48 dann, wenn auch der Hauptschalter 44 geschlossen ist, eine Betätigung des Magnetventils 32, so daß dann die Verbindung zwischen den Leitungen 56/1 und 57 durchgeschaltet ist. Betätigt der Fahrer dann das Betätigungsorgan 51 der Feststellbremseinrichtung, so wird Druck aus dem Vorrat 50 auf die Federspeicher der Bremsdruckzylinder 19/2 und 21/2 geleitet und dadurch nur die rechten Räder 19 und 21 der beiden Hinterachsen des Fahrzeuges abgebremst. In gleicher Weise bewirkt ein Schließen des Schalters 45 bzw. 49 dann, wenn auch der Hauptschalter 44 geschlossen ist, eine Betätigung des Magnetventiles 33, so daß dann die Verbindung zwischen den Leitungen 56/2 und 58 durchgeschaltet ist. Betätigt der Fahrer dann das Betätigungsorgan 51 der Feststellbremseinrichtung, so wird Druck von Vorrat 50 an die Federspeicher der Bremsdruckzylinder 18/2 und 20/2 geleitet und dadurch nur die linken Räder 18 und 20 der beiden Hinterachsen des Fahrzeuges abgebremst.

Sobald der vorher geschlossene Schalter 45 bzw. 46 bzw. 48 bzw. 49 geöffnet wird oder der Hauptschalter 44 geöffnet wird, schließt das vorher offene Magnetventil 32 bzw. 33 wieder, so daß dann die einseitige Bremsung des Fahrzeugs beendet ist.

Bei den Fahrzeugen gemäß Fig. 3 bis 6 ist jeweils eine Betriebsbremseinrichtung mit Antiblokkiersystem Grundlage für die Ergänzung durch eine Ausführungsform der erfindungsgemäßen Hilfsbremseinrichtung.

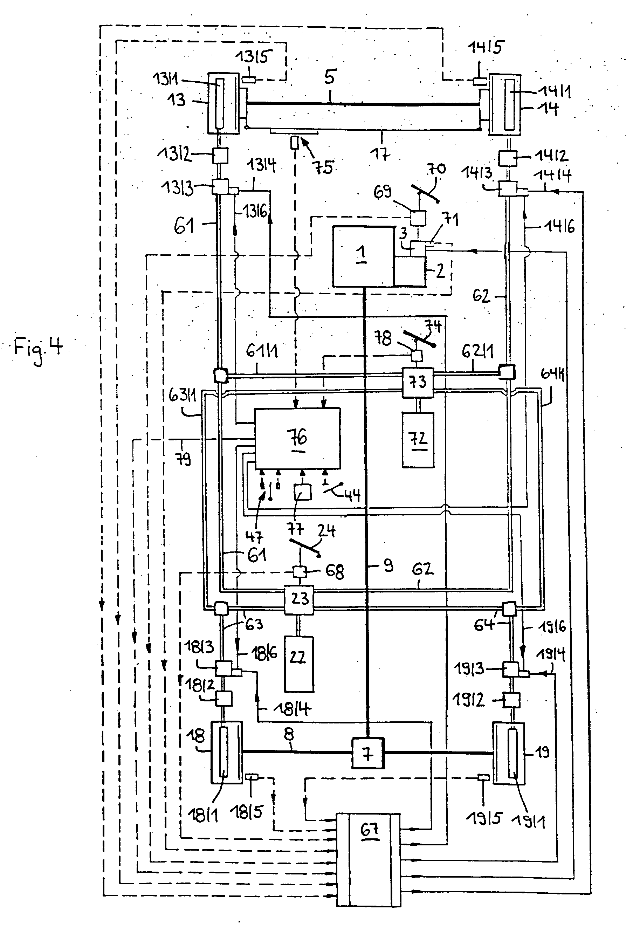

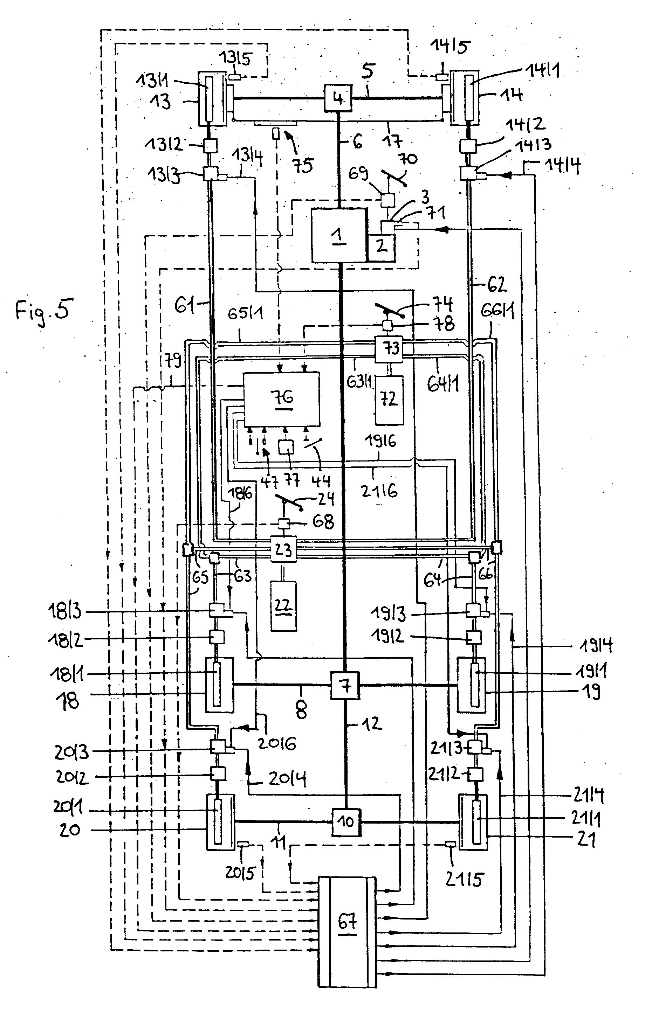

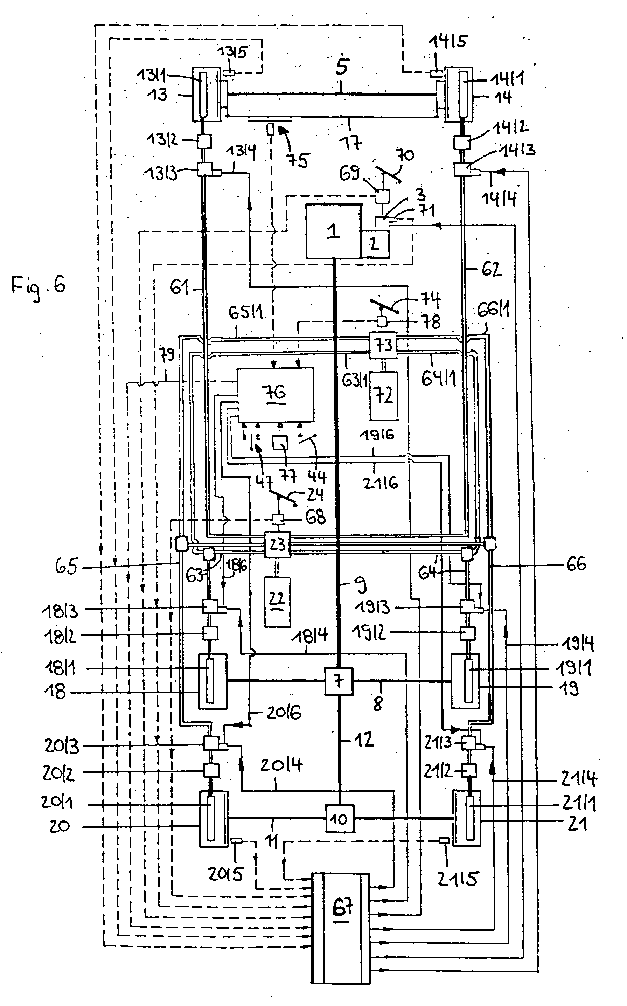

In diesem Fall sind am Betriebbremsventil 23 über je eine Druckleitung 61 bzw. 62 bzw. 63 bzw. 64 (Fig. 3 und 4) sowie zusätzlich 65 bzw. 66 die Bremsdruckzylinder 13/2 bzw. 14/2 bzw. 18/2 bzw. 19/2 (Fig. 3 und 4) bzw. zusätzlich 20/2 bzw. 21/2 (Fig. 5 und 6) angeschlossen. Außerdem ist in jede dieser Druckleitungen als Teil des Antiblockiersystems ein elektrisch betätigbares Drucksteuerventil eingeschaltet, von denen jedes mit dem Bezugszeichen des zugehörigen Rades 13 bzw. 14 bzw. 18 bzw. 19 bzw. 20 bzw. 21 und dem nachgestellten Index 3 bezeichnet ist. Jedes dieser Drucksteuerventile 13/3, 14/3, 18/3, 19/3, 20/3, 21/3, ist über eine elektrische Steuerleitung 13/4 bzw. 14/4 bzw. 18/4 bzw. 19/4 bzw. 20/4 bzw. 21/4 an eine elektronische Steuereinrichtung 67 angeschlossen, die Kernstück des Antiblockiersystems ist. An diese Steuereinrichtung ist außerdem pro hierdurch gesteuert abzubremsendem Rad ein dessen Drehbewegung erfassender Sensor 13/5 bzw. 14/5 bzw. 18/5 bzw. 19/5 (Fig. 3 und 4) bzw. 13/5 und 14/5 und 20/5 und 21/5 (Fig. 5 und 6) über je eine zugehörige elektrische Signalleitung angeschlossen. Jedem Sensor ist am zugehörigen Rad ein mit diesem mitrotierender Impulsgeber zugeordnet, der pro Radumdrehung eine Anzahl von Impulsen liefert, die vom Sensor zur Steuereinrichtung 67 weitergeleitet werden. Letztere bekommt außerdem von einem elektrischen Weggeber 68 die Betätigung des Betriebsbremspedals 24 und deren Größe über eine zugehörige Signalleitung, des weiteren von einem elektrischen Weggeber 69 die Betätigung eines Gaspedals 70 und deren Größe über eine zugehörige Signalleitung und außerdem über einen elektrischen Weggeber 71 die Stellung der Regelstange der Einspritzpumpe 2 über eine zugehörige Signalleitung gemeldet. Alle diese Signalleitungen sind in den Figuren 3 bis 6 gestrichelt eingezeichnet.

Auf der Basis der gemeldeten Signale wird steuereinrichtungsintern durch dortige Mikroprozessoren per Programm die notwendige Abbremsung des Fahrzeuges berechnet und anhand dieser Berechnung entsprechende Steuerbefehle zum getakteten Öffnen und Schließen der Drucksteuerventile 13/3 bzw. 14/3 bzw. 18/3 bzw. 19/3 bzw. 20/3 bzw. 21/3 an diese ausgegeben, so daß bei betätigtem Betriebsbremsventil 23 der Bremsdruck getaktet und entsprechend dosiert den Bremsdruckzylindern der abzubremsenden Räder zugeführt wird.

Auf dieser Betriebsbremseinrichtung mit Antiblockiersystem baut die in den Fig. 3 bis 6 dargestellte Ausführungsform der erfindungsgemäßen Hilfsbremseinrichtung auf. Diese besteht auch hier aus einer Druckmittelversorgung 72 und einem daran angeschlossenen Hilfsbremsventil 73, das durch ein Betätigungsorgan 74, z.B. Fußpedal oder Handhebel, vom Fahrer betätigbar ist. Das Hilfsbremsventil 73 steht über je eine Ausgangsleitung 61/1 bzw. 62/1 bzw. 63/1 bzw. 64/1 (Fig. 3 und 4), respektive eine Ausgangsleitung 63/1 bzw. 64/1 bzw. 65/1 bzw. 66/1 (Fig. 5 und 6) in Verbindung, wobei an der Verknüpfungsstelle jeweils zur Sicherheit ein 2-Wegeventil vorgesehen ist. Als weiteres Teil der Hilfsbremseinrichtung ist ein den Lenkeinschlag der Fahrzeuglenkeinrichtung erfassendes Organ 75, bestehend beispielsweise aus einem an der Spurstange 17 angeordneten Potentiometer, vorgesehen, das den jeweiligen Lenkeinschlag einem elektronischen Teil 76 der Hilfsbremseinrichtung meldet. Bei dem Organ 75 kann es sich auch um eine Einrichtung oder um einen inkrementalen Weggeber, wie in Fig. 1A dargestellt, handeln. Anstelle des Organs 75 kann mit dem elektronischen Teil 76 aber auch eine Blinkschalteranordnung 47 gekoppelt sein, die jener von Fig. 1B entspricht. An das elektronische Teil 76 sind außerdem ein Hauptschalter 44, der jenem von Fig. 1 entspricht, sowie ein Tachosignalgeber 77, ferner ein Weggeber 78, der die Betätigung des Betätigungsorganes 74 und dessen Größe meldet, und außerdem jedes Drucksteuerventil 13/3 bzw. 14/3 bzw. 18/3 bzw. 19/3 bzw. 20/3 bzw. 21/3 jeweils über eine elektrische Signalleitung 13/6 bzw. 14/6 bzw. 18/6 bzw. 19/6 bzw. 20/6 bzw. 21/6 angeschlossen. Außerdem steht der elektronische Teil 76 der Hilfsbremseinrichtung über eine Signalleitung 79 mit der elektronischen Steuereinrichtung 67 des Antiblockiersystems in Verbindung, über welche die Inaktivierung des letzteren steuerbar ist.

Das elektronische Teil 76 besteht im wesentlichen aus einer logischen UND-Verknüpfung, die dann ein Signal für eine einseitige Bremsung des Fahrzeuges erzeugt, wenn von allen angeschlossenen Teilen 75 oder 47 und 44 und 77 und 78 ein entsprechendes Signal vorliegt. Das heißt, vom Organ 75 muß ein maximaler Lenkeinschlag oder nahe bei diesem liegender Lenkeinschlag in der einen oder anderen Richtung signalisiert bzw. es muß der eine oder andere der beiden Schalter 48 bzw. 49 (wenn die Blinkerschaltung 47 verwendet ist) geschlossen sein. Außerdem muß der Hauptschalter 44 geschlossen sein. Ferner muß vom Tachosignalgeber 77 eine Geschwindigkeit signalisiert werden, die unter einem bestimmten Wert liegt. Wenn dann das Betätigungsorgan 74 der Hilfsbremseinrichtung vom Fahrer betätigt wird, gibt der Weggeber 78 das letzte noch notwendige Signal, das zur Auslösung der einseitigen Fahrzeugbremsung notwendig ist. Ist dies der Fall, dann werden je nach der Richtung des signalisierten Lenkeinschlages vom elektronischen Teil 76 die den Rädern jeweils nur einer Fahrzeuglängsseite zugehörigen Drucksteuerventile 13/3 und 18/3 oder 14/3 und 19/3 (Fig. 3 und 4) bzw. 18/3 und 20/3 oder 19/3 und 21/3 (Fig. 5 und 6) geöffnet, so daß dann vom Vorrat 72 Druck an die angeschlossenen Bremsdruckzylinder geleitet und dadurch die jeweiligen Räder dieser einen Fahrzeugseite abgebremst werden. Außerdem ist während dieses Bremsvorganges das Antiblockiersystem ausgeschaltet.

Sobald eines der für die Auslösung dieser einseitigen Bremsung notwendigen Signale nicht mehr vorliegt, wird dieser Bremsvorgang von dem Teil 76 der Hilfsbremseinrichtung wieder beendet, das heißt, die vorher offenen Drucksteuerventile werden wieder geschlossen.

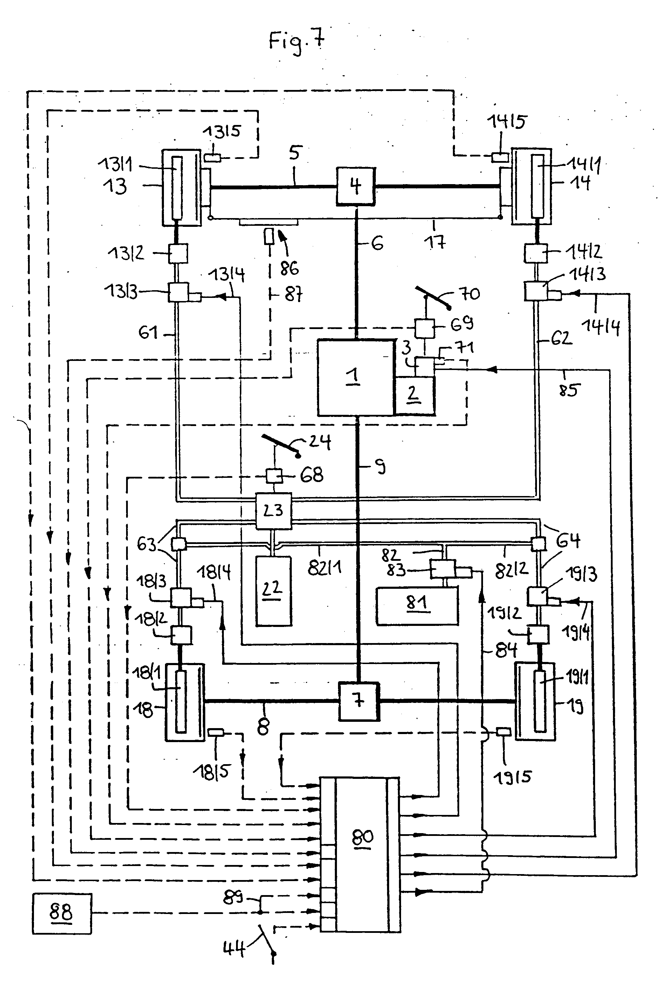

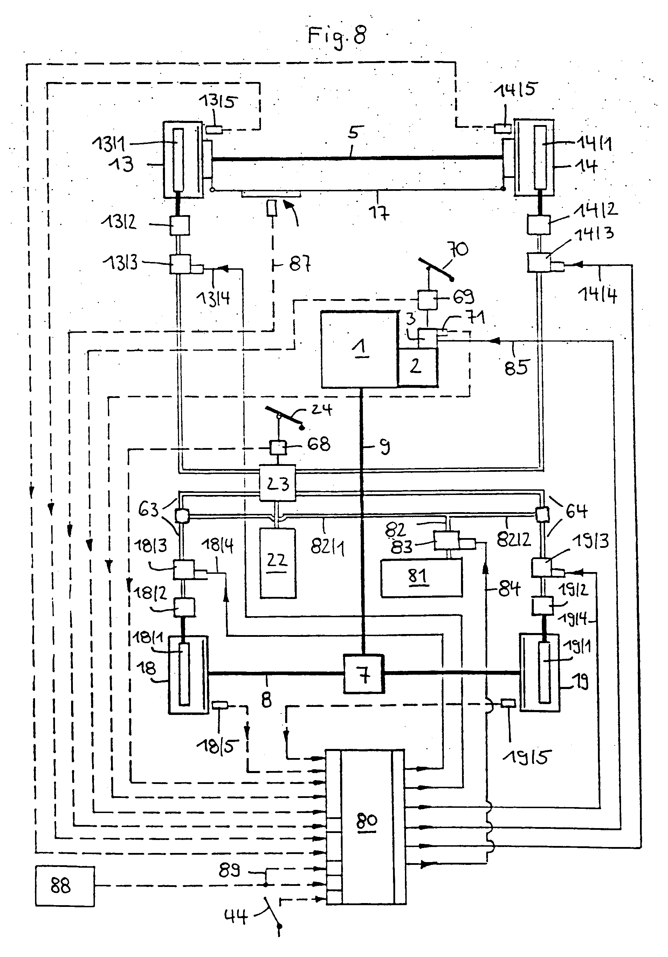

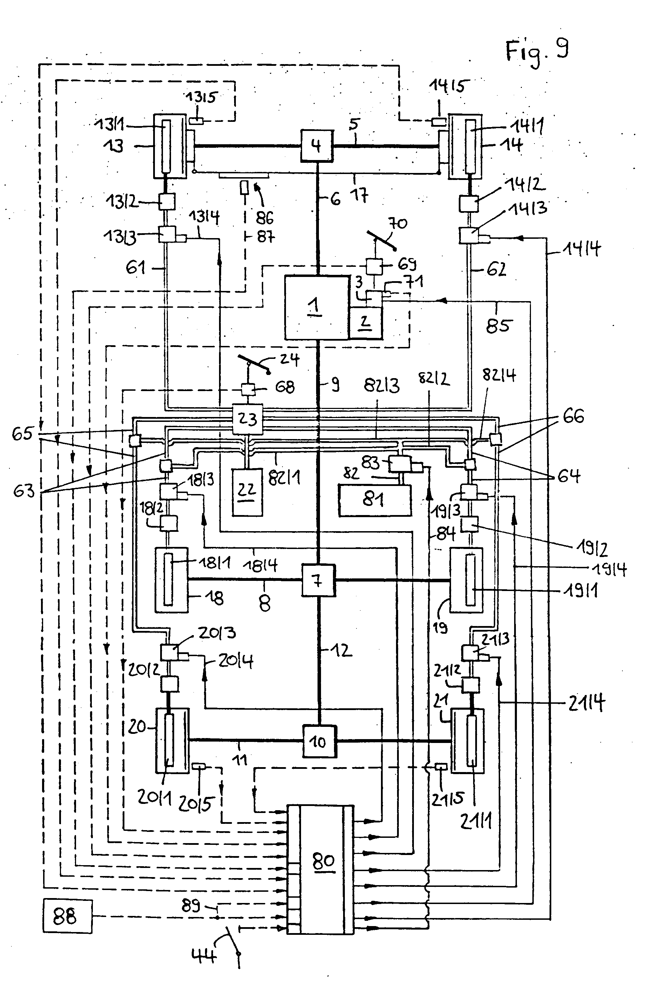

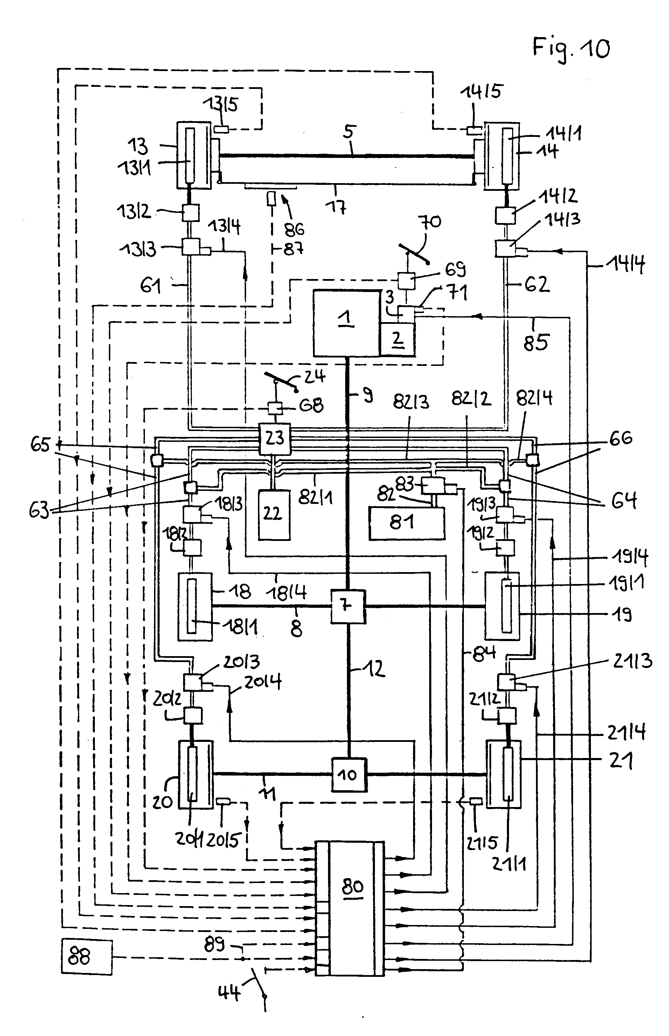

Bei den Fahrzeugen gemäß Fig. 7 bis 10 ist jeweils eine Betriebseinrichtung mit Antiblockiersystem und Antischlupfregelung Grundlage für die Ergänzung durch eine Ausführungsform der erfindungsgemäßen Hilfsbremseinrichtung. Fig. 7 stimmt, was die Betriebsbremseinrichtung mit Antiblockiersystem anbelangt, im wesentlichen mit Fig. 3 überein, das heißt, gleiche Teile sind mit gleichen Bezugzeichen angegeben. Ebenso stimmt Fig. 8, was die Betriebsbremseinrichtung mit Antiblockiersystem anbelangt, im wesentlichen mit Fig. 4 überein, das heißt, gleiche Teile sind mit gleichen Bezugzeichen angegeben. Ebenso stimmt Fig. 9, was die Betriebsbremseinrichtung mit Antiblockiersystem anbelangt, im wesentlichen mit Fig. 5 überein, das heißt, gleiche Teile sind mit gleichen Bezugzeichen angezogen. Ebenso stimmt Fig. 10, was die Betriebsbremseinrichtung mit Antiblockiersystem anbelangt, im wesentlichen mit Fig. 6 überein, so daß auch hier die gleichen Bezugzeichen für gleiche Teile übernommen sind.

In diesem Fall ist das Antiblockiersystem durch eine Antischlupfregeleinrichtung ergänzt. Diese setzt eine entsprechend erweiterte elektronische Steuereinrichtung 80 sowie eine eigene Druckmittelversorgung 81 und gesteuerte Zuleitung zu den Bremsen der schlupfzuregelnden Räder voraus. Bei Fig. 7 und 8 ist diese Antischlupfregelung nur für die Räder 18 und 19 der Hinterachse 8 des Fahrzeugs, bei Fig. 9 und 10 für die Räder 18, 19 und 20, 21, der beiden Hinterachsen 8 und 11 des Fahrzeugs vorgesehen. Diesen Vorgaben zufolge ist in die Speiseleitung 82 der Druckmittelversorgung 81 ein Magnetventil 83 eingeschaltet, das über eine Steuerleitung 84 durch Befehle der Steuereinrichtung 80 betätigt wird und normalerweise geschlossen ist. Die Speiseleitung 82 verzweigt sich im Fall von Fig. 7 und 8 nach dem Magnetventil 83 in zwei Zweigleitungen 82/1, 82/2, wobei die eine 82/1 über ein 2-Wegeventil an der Druckleitung 63 und die andere 82/2 über ein 2-Wegeventil an der Druckleitung 64 angeschlossen ist.

Im Fall der Fig. 9 und 10 verzweigt sich die Speiseleitung 82 nach dem Magnetventil 83 in vier Zweigleitungen 82/1, 82/2, 82/3 und 82/4, wobei die erste 82/1 über ein 2-Wegeventil an der Druckleitung 63 angeschlossen ist, die zweite 82/2 über ein 2-Wegeventil an der Druckleitung 64 angeschlossen ist, die dritte 82/3 über ein 2-Wegeventil an der Druckleitung 65 angeschlossen ist und die vierte 82/4 über ein 2-Wegeventil an der Druckleitung 66 angeschlossen ist.

Wenn das Gaspedal 70 betätigt ist, was der Steuereinrichtung 80 vom Weggeber 69 signalisiert wird, und wenn Drehzahldifferenzen zwischen den angetriebenen Rädern durch die Sensoren 13/5, 14/5, 18/5, 19/5, 20/5, 21/5, festgestellt werden, dann errechnet die Steuereinrichtung 80 die notwendigen Bremsmaßnahmen und gibt dann einen Befehl zum Öffnen des Magnetventiles 83 und entsprechende Taktbefehle zum taktweisen Öffnen und Schließen jenes Drucksteuerventiles 13/3, 14/3, 18/3, 19/3, 20/3, 21/3, das dem Bremszylinder des abzubremsenden Rades zwecks Vermeidung zu großen Schlupfes zugeordnet ist. Diese Bremsung erfolgt durch ein Druckmittel, das aus dem Vorrat 81 in die durchgeschalteten Leitungswege eingeleitet wird.

Sofern die Gasgabe mittels des Gaspedals 70 zu groß ist und die Antriebsräder zum zu starken Durchdrehen neigen, wird von der Steuereinrichtung 80 über die Steuerleitung 85 ein Befehl an den Stellmotor 3 gegeben, so daß die Regelstange der Einspritzpumpe 2 in Richtung kleinerer Einspritzmengen verstellt wird, so daß auch die an den Antriebsrädern wirkende Antriebsleistung des Antriebsmotors 1 reduziert wird.

Bei den Fig. 7 bis 10 baut die erfindungsgemäße Hilfsbremseinrichtung auf den Mitteln der Antischlupfregeleinrichtung auf. In diesem Fall ist als Teil der Hilfsbremseinrichtung wiederum ein den Lenkeinschlag in der einen oder anderen Richtung erfassendes Organ 86 vorgesehen, bei dem es sich um das gleiche 75 wie bei den Lösungen der Fig. 3 bis 6 oder den Einrichtungen gemäß den Figuren 1A oder 1B handeln kann. Dieses Organ 86 bzw. die Schalter 45, 46 oder 48, 49, sind über elektrische Signalleitungen 87 mit der Peripherie der Steuereinrichtung 80 verbunden. Des weiteren sind mit der Peripherie der Steuereinrichtung 80 ein Hauptschalter 44, dessen Funktion und Betätigung durch den Fahrer identisch mit den Ausführungsbeispielen gemäß Fig. 1 und 3 bis 6 ist, sowie ein Tachogenerator 88 verbunden, der über eine Signalleitung 89 ein für die Hilfsbremseinrichtung notwendiges Fahrgeschwindigkeitssignal einleitet.

In die Steuereinrichtung 80 des Antiblockiersystems und der Antischlupfregeleinrichtung ist hier der elektronische Teil der Hilfsbremseinrichtung integriert.

Sobald während der Fahrt des Fahrzeugs vom Organ 86 ein bestimmter vorgegebener Lenkeinschlag signalisiert wird bzw. einer der Schalter 45 bzw. 46 oder 48 bzw. 49 bei entsprechendem Lenkeinschlag geschlossen wird, ergeht ein Signal in die Peripherie der Steuereinrichtung 80. Außerdem geht ständig ein Geschwindigkeitssignal in letztere; wenn dieses Geschwindigkeitssignal einen Wert repräsentiert, der kleiner als ein Vorgabewert von beispielsweise 25 km/h bei geländegängigen Fahrzeugen ist, und wenn vom Fahrer außerdem der Hauptschalter 44 der Hilfsbremseinrichtung geschlossen wurde, dann gibt die Steuereinrichtung 80 ein Signal an das Magnetventil 83 zum Öffnen desselben sowie ein Signal an das aufgrund des Lenkeinschlages zu öffnende Drucksteuerventil 18/3 (Fig. 7 und 8) bzw. 18/3 und 20/3 (Fig. 9 und 10) für ausschließlich linksseitiges Bremsen des Fahrzeuges oder 19/3 (Fig. 7 und 8) bzw. 19/3 und 21/3 (Fig. 9 und 10) für ausschließlich rechtsseitiges Bremsen des Fahrzeuges. Dabei erfolgt diese einseitige Bremsung mit Druckmittel aus dem Vorrat 81 über das offene Magnetventil 83 und das jeweils offene Drucksteuerventil und den dadurch druckbeaufschlagten Bremsdruckzylinder des zugehörigen Rades.

Sobald eines der für die einseitige Fahrzeugbremsung repräsentativen Signale wieder aufgehoben ist, zum Beispiel der Lenkwinkel wieder verkleinert oder der Hauptschalter 44 geöffnet wird oder die Geschwindigkeit den vorgegebenen Bereich übersteigt, dann unterbricht die Steuereinrichtung 80 diesen einseitigen Bremsvorgang, wobei die vorher offenen Ventile wieder geschlossen werden.

Die erfindungsgemäße Hilfsbremseinrichtung ermöglicht mithin, unabhängig von ihrer jeweiligen Ausführungsform und Erweiterung bereits im Fahrzeug vorhandener Bremssysteme, eine für die Spurhaltung bei Durchfahrung enger Kurven sehr wirksame Unterstützung durch einseitige Abbremsung der jeweils kurveninneren Räder. Dies erweist sich insbesondere bei dreiachsigen, hinterachsseitig angetriebenen Lastkraftwagen bei deren Einsatz auf Baustellen, in unwegsamem Gelände und in der Forstwirtschaft beim Befahren von schmalen, kurvenreichen, unbefestigten Waldwegen als äußerst vorteilhaft. Aber auch bei allen Zugmaschinen, bei denen durch die angehängte bzw. getragene Last eine ungleichmäßige Achslastverteilung mit einer starken Entlastung der gelenkten Vorderachse auftritt, erweist sich das erfindungsgemäß mögliche einseitge Abbremsen des Fahrzeuges als große Hilfe beim Durchfahren enger Kurven, zum Beispiel Haarnadelkurven von Paßstraßen.

Die erfindungsgemäße Hilfsbremseinrichtung ist bei entsprechend anderer Festlegung der Randbedingungen "Lenkeinschlag" und "Geschwindigkeit", beispielsweise auch in Personenkraftwagen einsetzbar, die im Gelände bewegt oder als Sportfahrzeuge in Ralleys eingesetzt werden.

**Patentansprüche**

1. Bremssystem für ein lenkbares, zwei- oder mehrachsiges, wenigstens hinterachsseitig angetriebenes Kraftfahrzeug, mit einer hydraulisch bzw. pneumatisch auf die Räder einwirkenden Betriebsbremseinrichtung und einer auf die Räder wenigstens einer Achse einwirkenden Feststellbremseinrichtung, gekennzeichnet durch Ergänzung dieser Bremseinrichtungen mit Mitteln einer lenkwinkelabhängig arbeitenden Hilfsbremseinrichtung, die bedarfsweise aktivierbar ist und dann, wenn ein vorgegebener Mindest-Lenkeinschlag der gelenkten Räder bei einer unter einem bestimmten Wert liegenden Fahrgeschwindigkeit überschritten wird, durch gezielte Bereitstellung von Bremsdruck eine einseitige Abbremsung des kurveninneren Rades bzw. der kurveninneren Räder zumindest der angetriebenen Hinterachse(n) des Fahrzeugs steuert.

2. Bremssystem nach Anspruch 1, dadurch gekennzeichnet, daß die Hilfsbremseinrichtung eine Druckmittelversorgung (37, 50, 72, 81),ein an letzterer angeschlossenes, vom Fahrer über ein Betätigungsorgan (35, 51, 74) oder fernbetätigbares Hilfsbremsventil (36, 73, 83), ferner in je einer zum Bremsdruckzylinder (13/2, 14/2, 18/2, 19/2, 20/2, 21/2) des jeweiligen, einseitig abbremsbaren Rades (13, 14, 18, 19, 20, 21) hinführenden Druckleitung angeordnete, elektrisch betätigbare Ventile (32, 33; 13/3, 14/3, 18/3, 19/3, 20/3, 21/3) aufweist, denen zur Steuerung als elektrische Teile der Hilfsbremseinrichtung den Lenkeinschlag erfassende und bei Überschreiten eines vorgegebenen Grenzwertes ein Signal erzeugende Organe (45, 46, 16; 47, 48, 49; 75, 86), ein Hauptschalter 44, gegebenenfalls ein bei Unterschreiten einer vorgegebenen Grenzgeschwindigkeit ein Signal auslösender Geber (77, 88) und gegebenenfalls eine die elektrischen Signale auswertende und Schaltsignale an die Ventile ausgebende Steuereinrichtung (76, 80) zugeordnet sind.

3. Bremssystem nach den Ansprüchen 1 und 2, dadurch gekennzeichnet, daß die Hilfsbremseinrichtung auf den vorhandenen hydraulischen oder pneumatischen Bremskreisen der Betriebsbremseinrichtung des Fahrzeuges aufbaut, mithin jedes der Ventile (13/3, 14/3, 18/3, 19/3, 20/3, 21/3) in die zum jeweiligen Bremsdruckzylinder der Betriebsbremseinrichtung hinführende Druckleitung eingebaut ist. (Fig. 3 bis 10).

4. Bremssystem nach den Ansprüchen 1 und 2, dadurch gekennzeichnet, daß jedes der Magnetventile (32, 33) mit seiner Ausgangsleitung (38, 38/1, 38/2; 41, 41/1, 41/2) über ein 2-Wegeventil (39, 40 bzw. 42, 43) an einem für die Abbremsung der Räder jeweils einer Fahrzeuglängsseite zugehörigen Betriebsbremskreis angeschlossen und eingangsseitig mit dem Hilfsbremsventil (36) verbunden ist, daß außerdem jedes Magnetventil (32, 33) mit dem Hauptschalter (44) und dem den Lenkeinschlag erfassenden Organ (16, 45, 46 bzw. 47, 48, 49) verbunden ist (Fig. 1, 1A, 1B).

5. Bremssystem nach den Ansprüchen 1 und 2, dadurch gekennzeichnet, daß die Hilfsbremseinrichtung auf den hydraulischen oder pneumatischen Bremskreisen der Feststellbremseinrichtung des Fahrzeuges aufbaut, wobei die beiden Magnetventile (32, 33) eingangsseitig mit dem Ausgang (56) des Feststellbremsventiles (52) und ausgangsseitig jeweils mit einem Relaisventil (53, 54) verbunden sind, an welch jedes eingangsseitig die Druckmittelversorgung (50) und ausgangsseitig der Feststellbremskreis des Rades bzw. der Räder einer Fahrzeuglängsseite angeschlossen sind, und daß außerdem jedes Magnetventil (32, 33) mit dem Hauptschalter (44) und dem den Lenkeinschlag erfassenden Organ (16, 45, 46 bzw. 47, 48, 49) verbunden ist (Fig. 2, 2A, 2B).

6. Bremssystem nach den Ansprüchen 4 und 5, dadurch gekennzeichnet, daß das Magnetventil (32, 33) ein elektrisch betätigbares Umschaltventil ist, mit dem die zugehörige Druckleitung absperrbar oder für einseitige Bremsung des Fahrzeuges auf Durchlaß schaltbar ist.

7. Bremssystem nach Anspruch 3, dadurch gekennzeichnet, daß das Ventil (13/3, 14/3, 18/3, 19/3, 20/3, 21/3) ein in die zum Bremsdruckzylinder führende Druckleitung eingebautes, elektrisch betätigbares Drucksteuer- bzw. Umschaltventil ist, mit dem die Druckleitung absperrbar oder für einseitige Bremsung des Fahrzeuges auf Durchlaß schaltbar ist.

8. Bremssystem nach Anspruch 7, dadurch gekennzeichnet, daß jedes der Ventile (13/3, 14/3, 18/3, 19/3, 20/3, 21/3) an eine elektronische Steuereinrichtung (76 bzw. 80) angeschlossen ist, die ein Teil der Hilfsbremseinrichtung bildet.

9. Bremssystem nach Anspruch 8, dadurch gekennzeichnet, daß an die Steuereinrichtung (76, 80) ein Hauptschalter (44) angeschlossen ist, der vom Fahrer des Fahrzeuges zur Aktivierung der Hilfsbremseinrichtung betätigbar ist, und daß diese Aktivierung dem Fahrer am Armaturenbrett optisch oder auf akustischem Wege anzeigbar ist.

10. Bremssystem nach den Ansprüchen 8 und 9, dadurch gekennzeichnet, daß mit der Steuereinrichtung (76, 80) auch das den Lenkeinschlag erfassende Organ (16, 45, 46 bzw. 47, 48, 49 bzw. 75 bzw. 86) verbunden ist.

11. Bremssystem nach den Ansprüchen 4, 5 und 10, dadurch gekennzeichnet, daß das mit den Magentventilen (32, 33) bzw. der Steuereinrichtung (76, 80) verbundene, den Lenkeinschlag erfassende Organ ein vom Blinkhebel des Fahrzeugs zu betätigender Blinkhebelschalter (47) ist, mit dem je nach Richtungswahl durch den Blinkhebel durch Schließen des einen oder anderen links bzw. rechts der Neutralstellung liegenden Schalters (48 oder 49) ein Vorerkennungssignal für die einzuschlagende Kurvenrichtung bzw. bei geschlossenem Hauptschalter (44) die Öffnung jenes Magnetventiles (32 bzw. 33) bewirkbar ist, das für die einseitige Bremsung des Fahrzeugs entsprechend dem Lenkeinschlag maßgebend ist.

12. Bremssystem nach den Ansprüchen 4, 5 und 10, dadurch gekennzeichnet, daß das mit den Magnetventilen (32, 33) bzw. der Steuereinrichtung (76, 80) verbundene, den Lenkeinschlag erfassende Organ durch zwei im Fahrzeug ortsfest im Bewegungsbereich eines für den Lenkeinschlag repräsentativen Teiles der Lenkeinrichtung, zum Beispiel Lenkhebel, Spurstange oder dergleichen angeordnete Grenzwertschalter (45, 46) gebildet ist, von denen der eine (45) den rechten Mindest-Lenkeinschlag und der andere (46) den linken Mindest-Lenkeinschlag lagemäßig vorgibt und welcher jeder durch ein mechanisches Betätigungsorgan (16) am Lenkeinrichtungsteil auslösbar ist und dann ein Vorerkennungssignal für die Lenkeinschlagrichtung und das Überschreiten des Lenkeinschlaggrenzwinkels auslösbar und in die Steuereinrichtung (76, 80) einleitbar ist, bzw. mit dem bei geschlossenem Hauptschalter (44) die Öffnung jenes Magnetventiles (32 bzw. 33) bewirkbar ist, das für die einseitige Bremsung des Fahrzeuges entsprechend dem Lenkeinschlag maßgebend ist.

13. Bremssystem nach den Ansprüchen 8 bis 12, dadurch gekennzeichnet, daß an die Steuereinrichtung (76, 80) des weiteren ein Geschwindigkeits-Grenzwertgeber (77, 88) angeschlossen ist.

14. Bremssystem nach den Ansprüchen 8 bis 13, dadurch gekennzeichnet, daß die Steuereinrichtung intern die Signale des den Lenkeinschlag bzw. das Überschreiten des Lenkeinschlag-Grenzwertes feststellenden Organes (16, 45, 46 bzw. 47, 48, 49 bzw. 75 bzw. 86), ferner des Hauptschalters (44) und des Geschwindigkeits-Grenzwertgebers (77, 88) logisch nach UND-Funktion verarbeitet und bei Vorliegen eines weiteren Signales, das die Betätigung des Betätigungsorganes (74 bzw. 24) für die Hilfsbremsung signalisiert, Befehle an jene angeschlossenen Ventile (13/3, 14/3, 18/3, 19/3, 20/3, 21/3) zum Öffnen derselben ausgibt, die den Rädern an jener Fahrzeuglängsseite zugeordnet sind, die einseitig abgebremst werden sollen.

15. Bremssystem nach Anspruch 5, dadurch gekennzeichnet, daß die Auslösung der Druckmittelzuführung für einen einseitigen Bremsvorgang durch das Betätigungsorgan der Feststellbremseinrichtung erfolgt.

16. Bremssystem nach Anspruch 14, dadurch gekennzeichnet, daß die Auslösung der Druckmittelzuführung für einen einseitigen Bremsvorgang durch ein vom Pedal (24) der Betriebsbremseinrichtung verschiedenes, vom Fahrer zu betätigendes Organ (74), das durch ein Pedal oder einen Handhebel gebildet sein kann, erfolgt.

17. Bremssystem nach den vorhergehenden Ansprüchen, dadurch gekennzeichnet, daß bei Auslösung des einseitigen Bremsvorganges durch die Hilfsbremseinrichtung am jeweils abzubremsenden Rad ein konstanter Bremsdruck erzeugt wird.

18. Bremssystem nach den Ansprüchen 1 bis 16, dadurch gekennzeichnet, daß bei Auslösung des einseitigen Bremsvorganges durch die Hilfsbremseinrichtung am jeweils abzubremsenden Rad ein variabler Bremsdruck erzeugt wird, der der Bewegung des auslösenden Betätigungsorganes (74 bzw. 24) proportional bzw. von dieser abgeleitet ist.

19. Bremssystem nach mehreren der vorhergehenden Ansprüche, dadurch gekennzeichnet, daß die Ventile (13/3, 14/3, 18/3, 19/3, 20/3, 21/3) Teile des im Fahrzeug vorhandenen Antiblockiersystems (ABS) und einer etwaig des weiteren vorhandenen Antischlupfregeleinrichtung (ASR) sind.

20. Bremssystem nach Anspruch 19, dadurch gekennzeichnet, daß der elektronische Steuerungsteil der Hilfsbremseinrichtung mit der elektronischen Steuereinrichtung (80) der Antiblockier- und Antischlupfregeleinrichtung zusammengefaßt ist.

21. Bremssystem nach Anspruch 20, dadurch gekennzeichnet, daß bei Aktivierung der Hilfsbremseinrichtung durch deren elektronischen Teil ein Prioritätssignal ausgegeben wird, mit dem die Antiblockier- und Antischlupfregelung für die Zeit der einseitigen Bremsung außerkraft gesetzt wird.

22. Bremssystem nach den vorhergehenden Ansprüchen, dadurch gekennzeichnet, daß die einseitige Bremsung mittels der Hilfsbremseinrichtung, wenn diese in geländegängigen Lastkraftwagen oder Sattelzugmaschinen eingebaut ist, bei Unterschreiten einer Geschwindigkeit von etwa 25 km/h und einem Lenkeinschlag von mindestens 90% des Volleinschlages auslösbar ist.

**Claims**

1. Brake system for a steerable, two- or multi-axle motor vehicle with at least rear-wheel drive and a service brake which acts on the wheels hydraulically or pneumatically and a parking brake which acts on the wheels of at least one axle characterised by the fact that An auxiliary brake system operating in dependence of the steering angle is added to these brake systems and can be activated as required and, if a preset minimum steering angle of the steered wheels is exceeded at a speed below a certain value, controls, by means of a specific supply of brake pressure, a unilateral deceleration of the wheel(s) on the inside of the curve on at least the driven rear axle(s).

2. Brake system as under Claim 1, characterised by the fact that the auxiliary brake system has a pressure medium supply (37, 50, 72, 81), an auxiliary brake valve (36, 73, 83) connected to the aforementioned pressure medium supply which can be operated by the driver either via an actuating organ (35, 51, 74) or by remote control and with electrically actuated valves (32, 33; 13/3, 14/3, 18/3, 19/3, 20/3, 21/3) located in each of the pressure lines to the brake pressure cylinder (13/2, 14/2, 18/2, 19/2, 20/2, 21/2) of the individual wheels (13, 14, 18, 19, 20, 21) which can be decelerated unilaterally, allocated to which valves are organs (45, 46, 16; 47, 48, 49; 75, 86) which as electrical parts of the auxiliary brake system record the steering angle and, if a preset limit value is exceeded, generate a signal; a main switch 44; if necessary, a transmitter (77, 88) which triggers a signal if the speed falls below a preset value, and, if necessary, a control unit (76, 80) which evaluates the electrical signals and sends switching signals to the valves.

3. Brake system as under the Claims 1 and 2, characterised by the fact that the auxiliary brake system takes the existing hydraulic or pneumatic brake circuits of the vehicle's service brake as a basis and that, consequently, all valves (13/3, 14/3, 18/3, 19/3, 20/3, 21/3) are integrated in the pressure line to the individual brake pressure cylinders of the service brake unit. (Pic. 3 to 10).

4. Brake system as under Claims 1 and 2, characterised by the fact that the output line (38, 38/1, 38/2; 41, 41/1, 41/2) of each solenoid valve (32, 33) is, via a two-way valve (39, 40 or 42, 43), connected with a service brake circuit pertaining to one of the vehicle's longitudinal sides for the deceleration of the wheels, and that the input line of each solenoid valve (32, 33) is linked to the auxiliary brake valve (36) and that, in addition, each solenoid valve (32, 33) is connected with the main switch (44) and the organ (16, 45, 46 or 47, 48, 49) which records the steering angle (Pic. 1, 1A, 1B).

5. Brake system as under the Claims 1 and 2, characterised by the fact that the auxiliary brake system takes the hydraulic or pneumatic brake circuits of the vehicle's parking brake as a basis, with the input of the solenoid valves (32, 33) being connected to the output (56) of the parking brake valve (52) and their outputs with one relay valve (53, 54) each, the pressure supply (50) being connected with the input of each of the relay valves (53, 54), and the parking brake circuit of the wheel(s) of one longitudinal side of the vehicle being connected with their output, and that, in addition, each solenoid valve (32, 33) is connected with the main switch (44) and with the organ (16, 45, 46 or 47, 48, 49) which records the steering angle (Pic. 2, 2A, 2B).

6. Brake system as under the Claims 4 and 5, characterised by the fact that the solenoid valve (32, 33) is an electrically actuated reversing valve with which the pressure line pertaining to it can be closed off or switched to flow for unilateral deceleration of the vehicle.

7. Brake system as under Claim 3, characterised by the fact that the valve (13/3, 14/3, 18/3, 19/3, 20/3, 21/3) is an electrically actuated pressure control and reversing valve which is integrated in pressure line to the brake pressure cylinder and can close off the pressure line or switch it to flow for unilateral deceleration of the vehicle.

8. Brake system as under Claim 7, characterised by the fact that each of the valves (13/3, 14/3, 18/3, 19/3, 20/3, 21/3) is connected with an electronic control unit (76 or 80) which is part of the auxiliary brake system.

9. Brake system as under Claim 8, characterised by the fact that a main switch (44) which the driver can actuate to activate the auxiliary brake system is connected with the control unit (76, 80) and that this activation can be indicated to the driver optically or acoustically in the dashboard.

10. Brake system as under the Claims 8 and 9, characterised by the fact that the organ (16, 45, 46 or 47, 48, 49 or 75 or 86) recording the steering angle is also connected with the control unit (76, 80).

11. Brake system as under the Claims 4, 5 and 10, characterised by the fact that the organ which records the steering angle and which is connected with the solenoid valves (32, 33) and/or with the control unit (76, 80) is a signal lever switch (47) to be actuated by the vehicle's turn signal lever, which switch can, depending on the choice of direction by means of the turn signal lever, by closing one or the other switch (48 or 49) located at the left- and right-hand side of the neutral position, activate an early recognition signal for the curve direction to be taken or, if the main switch (44) is closed, open that solenoid valve (32 or 33) which governs the unilateral deceleration of the vehicle in accordance with the steering angle.

12. Brake system as under the Claims 4, 5 and 10, characterised by the fact that the organ which records the steering angle and which is connected with the solenoid valves (32, 33) and/or with the control unit (76, 80) is composed of two limit switches (45, 46) which are permanently mounted in the vehicle, i.e. within the range of motion a part of the steering mechanism representative of the steering angle, eg steering lever, steering tie rod or a similar part, of which the one (45) sets the position for the right minimum steering angle and the other (46) that for left minimum steering angle, each of which can be triggered by a mechanical actuating organ (16) on said part of the steering mechanism, then triggering an early recognition signal for the steering angle direction and the exceeding of the steering angle limit value and feeding said signal into the control unit (76, 80) or, if the main switch (44) is closed, can open that solenoid valve (32 or 33) which governs the unilateral deceleration of the vehicle in accordance with the steering angle.

13. Brake system as under the Claims 8 to 12, characterised by the fact that, in addition, a speed limit value encoder (77, 88) is linked to the control unit (76, 80).

14. Brake system as under the Claims 8 to 13, characterised by the fact that, internally, the control unit logically processes the signals of the organ (16, 45, 46 or 47, 48, 49 or 75 or 86) recording the steering angle and the exceeding of the steering angle limit value as well as the signals of the main switch (44) and of the speed limit value encoder (77, 88) according to AND function and which, if another signal is available which signalises the actuation of the actuating organ (74 or 24) for the auxiliary braking, sends commands for those connected valves (13/3, 14/3, 18/3, 19/3, 20/3, 21/3) to be opened which are assigned to the wheels on that longitudinal side of the vehicle which are to be decelerated unilaterally.

15. Brake system as under Claim 5, characterised by the fact that the actuating organ of the parking brake triggers the pressure medium supply for a unilateral braking action.

16. Brake system as under Claim 14, characterised by the fact that the pressure medium supply for a unilateral braking action is triggered by an organ (74) to be actuated by driver other than the pedal (24) of the service brake, which organ can be a pedal or a hand lever.

17. Brake system as under the Claims stated above, characterised by the fact that a constant brake pressure will be generated at the wheel to be decelerated when a unilateral braking action is triggered by the auxiliary brake system.

18. Brake system as under the Claims 1 to 16, characterised by the fact that when a unilateral braking action is triggered by the auxiliary brake system a variable brake pressure proportional to the motion of the triggering actuating organ (74 or 24) or derived from it is generated at the wheel to be decelerated.

19. Brake system as under several of the Claims stated above, characterised by the fact that the valves 13/3, 14/3, 18/3, 19/3, 20/3, 21/3) are parts of the anti-lock braking system (ABS) installed in the vehicle and of a possible additional anti-spin regulator (ASR).

20. Brake system as under Claim 19, characterised by the fact that the electronic control unit of the auxiliary brake system is combined with the electronic control unit (80) of the anti-lock braking system and the anti-spin regulator.

21. Brake system as under Claim 20, characterised by the fact that when the auxiliary brake system is activated its electronic control unit will emit a priority signal which deactivates the anti-lock braking system and the anti-spin regulator for the period of the unilateral deceleration.

22. Brake system as under the Claims stated above, characterised by the fact that if the auxiliary brake system is installed in trucks for off-road terrain or semitrailer tractors the unilateral deceleration which it effects can be triggered when the speed falls below approx. 25 km/h and the steering angle is at least 90 % of the maximum steering angle.

**Revendications**

1. Système de freinage pour un véhicule dirigeable à deux ou plusieurs essieux avec entraînement au moins sur les roues arrière, avec un dispositif de freinage en marche agissant hydrauliquement ou pneumatiquement sur les roues et d'un dispositif de frein de blocage agissant sur les roues d'au moins un essieu, système de freinage caractérisé par le fait que pour compléter ces dispositifs de freinage il est prévu des moyens appartenant à un dispositif de freinage auxiliaire agissant en fonction de l'angle de braquage, qui peuvent être actionnés selon les besoins et qui quand un braquage minimal prédéfini des roues directrices est dépassé dans le cas d'une vitesse se trouvant en dessous d'une valeur déterminée, commande alors par la mise en place voulue d'une pression de freinage un freinage d'un seul côté de la roue située à l'intérieur du virage ou des roues situées à l'intérieur du virage d'au moins l'essieu arrière ou les essieux arrière d'entraînement du véhicule.

2. Système de freinage selon la revendication 1, caractérisé en ce que le dispositif de freinage auxiliaire présente une alimentation en fluide sous pression (37, 50, 72, 81), une soupape de freinage auxiliaire (36, 73, 83), relié à cette dernière, pouvant être actionné par le conducteur au moyen d'un organe d'actionnement (35, 51, 74) ou pouvant être actionné à distance, en outre des soupapes (32, 33 ; 13/3, 14/3, 18/3, 19/3, 20/3, 21/3) pouvant être actionnées électriquement, disposées dans chacune des canalisations sous pression conduisant au cylindre de freinage (13/2, 14/2, 18/2, 19/2, 20/2, 21/2) de la roue respective (13, 14, 18, 19, 20, 21) pouvant être fermée d'un seul côté, soupapes auxquelles sont associés des organes (45, 46, 16 ; 47, 48, 49 ; 75; 86) enregistrant le braquage pour la commande comme éléments électriques du dispositif de freinage auxiliaire et produisant un signal lors du dépassement d'une valeur limite prédéfinie, à savoir un commutateur central 44, le cas échéant un capteur (77, 88) délivrant un signal lors du dépassement d'une vitesse limite prédéfinie et le cas échéant un dispositif de commande (76, 80) exploitant les signaux électriques et délivrant un signal d'enclenchement aux soupapes.

3. Système de freinage selon les revendications 1 et 2, caractérisé en ce que le dispositif de freinage auxiliaire repose sur les circuits de freinage hydrauliques ou pneumatiques existants du dispositif de freinage en marche, dans lequel est inséré chacune des soupapes (13/3, 14/3, 18/3, 19/3, 20/3, 21/3) dans la canalisation sous pression conduisant au cylindre de freinage correspondant du dispositif de freinage en marche (figures 3 à 10).

4. Système de freinage selon les revendications 1 et 2, caractérisé en ce que chacune des soupapes électromagnétiques (32, 33) est reliée par sa conduite de sortie (38, 38/1, 38/2 ; 41, 41/1, 41/2) au moyen d'un distributeur à deux voies (39, 40 ou 42, 43) à un circuit de freinage en marche correspondant pour le freinage des roues d'un des côtés longitudinaux du véhicule et à la soupape de freinage auxiliaire (36) du côté de l'entrée, en ce qu'en outre, chaque soupape électromagnétique (32, 33) est reliée au commutateur principal (44) et à l'organe (16, 45, 46 ou 47, 48, 49) enregistrant le braquage (figures 1, 1A, 1B).

5. Système de freinage selon les revendications 1 et 2, caractérisé en ce que le dispositif de freinage auxiliaire repose sur les circuits hydrauliques ou pneumatiques de freinage du dispositif de frein de blocage du véhicule, les deux soupapes électromagnétiques (32, 33) étant reliées du côté de l'entrée à la sortie (56) de la soupape de frein de blocage (52) et du côté sortie respectivement à une soupape à relais (53, 54) à chacune desquelles sont raccordés du côté entrée l'alimentation en fluide sous pression (50) et du côté sortie le circuit de frein de blocage de la roue ou des roues d'un côté longitudinal du véhicule et en ce qu'en outre chaque soupape électromagnétique (32, 33) est reliée au commutateur principal (44) et à l'organe enregistrant le braquage (16, 45, 46 ou 47, 48, 49) (voir figures 2, 2A, 2B).

6. Système de freinage selon les revendications 4 et 5, caractérisé en ce que la soupape électromagnétique (32, 33) est une soupape d'inversion pouvant être actionnée électriquement avec laquelle on peut bloquer la canalisation sous pression correspondante ou laisser passer la pression pour obtenir le freinage d'un seul côté du véhicule.

7. Système de freinage selon la revendication 3, caractérisé en ce que la soupape (13/3, 14/3, 18/3, 19/3, 20/3, 21/3) est une soupape de commande de pression ou de commutation insérée dans la canalisation sous pression conduisant au cylindre de freinage, et pouvant être actionnée électriquement, avec laquelle on peut bloquer la canalisation sous pression ou laisser passer la pression pour obtenir le freinage d'un seul côté du véhicule.

8. Système de freinage selon la revendication 7, caractérisé en ce que chacune des soupapes (13/3, 14/3, 18/3, 19/3, 20/3, 21/3) est raccordée à un dispositif de commande (76 ou 80) électronique, qui forme une partie du dispositif de freinage auxiliaire.

9. Système de freinage selon la revendication 8, caractérisé en ce qu'un commutateur principal (44) est raccordé au dispositif de commande (76, 80), dispositif qui peut être actionné par le conducteur du véhicule pour agir sur le dispositif de freinage auxiliaire et en ce que cette action est signalée au conducteur sur le tableau de bord de façon optique ou par un moyen sonore.

10. Système de freinage selon les revendications 8 et 9, caractérisé en ce qu'aussi l'organe enregistrant le braquage (16, 45, 46 ou 47, 48, 49 ou 75 ou 86) est relié au dispositif de commande (76, 80).

11. Système de freinage selon les revendications 4, 5 et 10, caractérisé en ce que l'organe relié aux soupapes électromagnétiques (32, 33) ou au dispositif de commande (76, 80), enregistrant le braquage, est un commutateur de levier de clignotement (47) à actionner par le levier de clignotement du véhicule, avec lequel peut être déclenché un signal de préreconnaissance pour le braquage à opérer en fonction du sens du virage selon le sens choisi de fonctionnement du levier de clignotement par la fermeture du commutateur (48 ou 49) se trouvant dans l'une ou l'autre position à droite ou à gauche de la position neutre ou dans le cas où le commutateur principal (44) est fermé pouvant provoquer l'ouverture de chaque soupape électromagnétique (32 ou 33), qui est déterminante pour le freinage d'un seul côté du véhicule en fonction du braquage.

12. Système de freinage selon les revendications 4, 5 et 10, caractérisé en ce que l'organe relié aux soupapes électromagnétiques (32, 33) ou au dispositif de commande (76, 80) enregistrant le braquage est formé par deux commutateurs à valeur limite (45, 46) disposés de façon fixe sur le véhicule dans la zone d'action d'un élément du dispositif de direction représentatif pour le braquage, par exemple un levier de direction, une barre d'accouplement, ou une pièce analogue, dont l'un des deux commutateurs (45) prédéfinit le braquage minimal à droite et l'autre (46) le braquage minimal à gauche selon la position et dont chacun peut être déclenché par un organe d'actionnement mécanique (16) sur l'élément indiquant le sens du braquage et en ce qu'ensuite un signal de préreconnaissance pour le sens de braquage et le dépassement de l'angle de braquage peut être déclenché et être introduit dans le dispositif de commande (76, 80) ou avec lequel peut être actionné l'ouverture de chaque soupape électromagnétique (32 ou 33) quand le commutateur principal (44) est fermé, soupapes qui sont déterminantes pour le freinage d'un seul côté du véhicule en fonction du braquage.

13. Système de freinage selon les revendications 8 à 12, caractérisé en ce qu'en outre, un capteur à valeur limite (77, 88) de la vitesse est raccordé au dispositif de commande (76, 80).

14. Système de freinage selon les revendications 8 à 13, caractérisé en ce que le dispositif de commande retraite de façon interne les signaux de l'organe (16, 45, 46 ou 47, 48, 49 ou 75 ou 86) qui détermine le braquage ou le dépassement de la valeur limite de braquage, en outre du commutateur principal (44) et du capteur à valeur limite (77, 78) de la vitesse selon une fonction ET et quand il existe un autre signal qui signale l'actionnement de l'organe d'actionnement (74 ou 24) pour le freinage auxiliaire, délivre des ordres à chaque soupape raccordée (13/3, 14/3, 18/3, 19/3, 20/3, 21/3) pour son ouverture, soupapes associées aux roues de chaque côté longitudinal du véhicule, qui doivent être freinées d'un seul côté.

15. Système de freinage selon la revendication 5, caractérisé en ce que le déclenchement du passage du fluide sous pression pour un processus de freinage d'un seul côté est obtenu grâce à l'organe d'actionnement du dispositif de frein de blocage.

16. Système de freinage selon la revendication 14, caractérisé en ce que le déclenchement du passage du fluide sous pression pour un processus de freinage d'un seul côté est obtenu grâce à un organe (74) différent de la pédale (24) du dispositif de freinage en marche, organe devant être actionné par le conducteur et qui peut être constitué par une pédale ou un levier à main.

17. Système de freinage selon les revendications précédentes, caractérisé en ce que lors du déclenchement du processus de freinage d'un seul côté par le dispositif de freinage auxiliaire sur la roue correspondante à freiner, il est exercé une pression de freinage constante.

18. Système de freinage selon les revendications 1 à 16, caractérisé en ce que lors du déclenchement du processus de freinage unilatéral, il est produit par le dispositif de freinage auxiliaire sur chaque roue à freiner une pression de freinage variable, qui est évacuée proportionnellement au mouvement de l'organe d'actionnement à déclencher (74 ou 24) ou par celui-ci.

19. Système de freinage selon plusieurs revendications précédentes, caractérisé en ce que les soupapes (13.3, 14/3, 18/3, 19/3, 20/3, 21/3) sont des éléments du système antiblocage (ABS) existant dans le véhicule et d'un dispositif de régulation antiglissement (ASR) existant éventuellement en outre.

20. Système de freinage selon la revendication 9, caractérisé en ce que l'élément de commande électronique du dispositif de freinage auxiliaire est rassemblé avec le dispositif (80) de commande électronique du dispositif antiblocage et du dispositif de régulation anti-glissement.

21. Système de freinage selon la revendication 20, caractérisé en ce que lors de l'actionnement du dispositif de freinage auxiliaire par l'élément électronique, il est délivré un signal de priorité, avec lequel la régulation antiblocage et la régulation anti-glissement est débranchée pour la durée du freinage d'un seul côté.

22. Système de freinage selon les revendications précédentes, caractérisé en ce que le freinage d'un seul côté au moyen du dispositif de freinage auxiliaire, peut être débranché quand celui-ci est monté sur un camion tous terrains ou sur un tracteur de semi-remorque, lors du franchissement d'une vitesse d'environ 25 km/h et d'un braquage d'au moins 90 % du braquage total.

Fig. 1

Fig. 1A

Fig. 1B

EP 0 295 396 B1

Fig. 2

Fig. 2A

Fig. 2B

EP 0 295 396 B1

EP 0 295 396 B1

Fig.3

18

Fig. 4

Fig. 5

Fig. 6

Fig. 7

Fig. 8

Fig. 9

EP 0 295 396 B1

24

Fig. 10